# EUROPEAN PATENT SPECIFICATION

(11) **EP 1 547 861 B1**
(45) Date of publication and mention of the grant of the patent: **15.07.2009**
(21) Application number: 04030709.2
(22) Date of filing: 23.12.2004
(51) Int. Cl.: B60Q 1/00, F21S 8/10, F21V 7/00

(54) **Vehicular lamp**
Fahrzeugleuchte
Lampe pour véhicule

(30) Priority: 26.12.2003 JP 2003432514
(43) Date of publication of application: 29.06.2005
(73) Proprietor: Mazda Motor Corporation, Aki-gun, Hiroshima (JP); Stanley Electric Co., Ltd., Meguro-ku Tokyo (JP)
(72) Inventor: Takeuchi, Tetsuya c/o Mazda Motor Corporation, Aki-gun Hiroshima (JP); Kurisu, Kunihiko c/o Mazda Motor Corporation, Aki-gun Hiroshima (JP); Yoshida, Atsushi c/o Mazda Motor Corporation, Aki-gun Hiroshima (JP); Oshita, Hiroyuki c/o Stanley Electric Co., Ltd., Meguro-ku Tokyo (JP)
(74) Representative: Wagner, Karl H.

(56) References cited:
- EP-A- 1 243 467
- DE-A1- 4 112 194
- DE-U1- 20 212 478
- DE-U1- 20 311 688
- US-A- 4 727 458

## Description

### Field of the Invention

The present invention relates to a vehicular lamp. More particularly, it relates to a vehicular lamp configured to combine two lights having respective purposes, such as a headlight for illuminating a traveling path of a particular vehicle at night and a position lamp for indicating the existence of the particular vehicle to oncoming vehicles at night, for example.

### Description of the Related Art

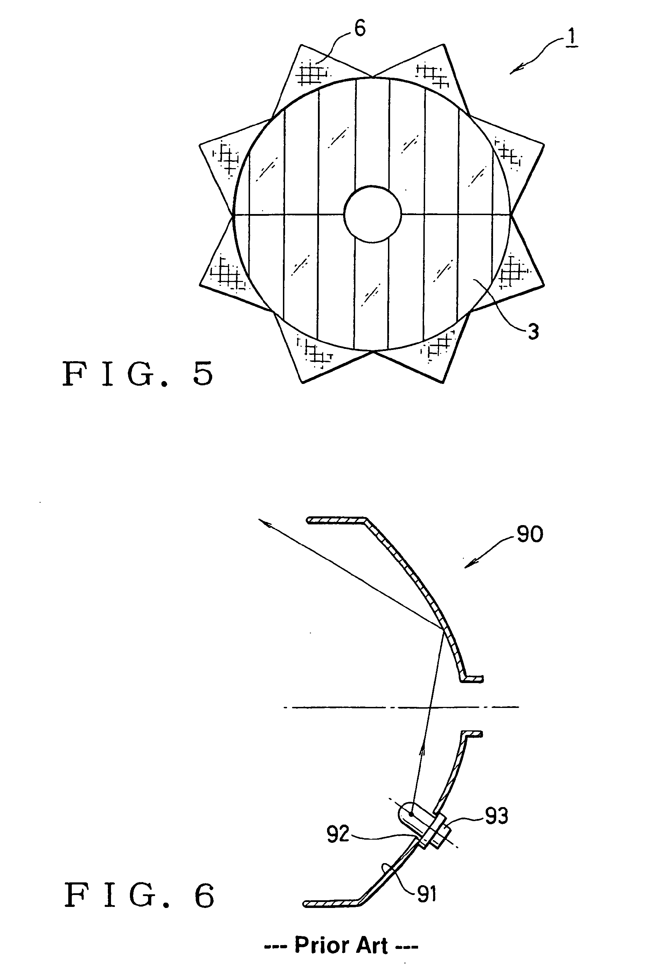

A vehicular lamp, such as a headlamp 90, equipped with a position bulb 93 as shown in Fig. 6 has been well known in the art. The headlamp 90 includes a reflector 91 with a hole 92 formed therethrough. The position bulb 93 protrudes through the hole 92 into the lamp. The position bulb 93 is turned on if necessary, for example, at dusk to indicate the existence of a particular vehicle to other vehicles at night when the headlamp 90 is not turned on.

In such the case, it is ideally preferable if the position bulb 93 can make the entire surface of the reflector 91 of the headlight 90 brilliant to improve the visibility from oncoming vehicles. In contrast, if light from the position bulb reflects at the reflector 91 of the headlight 90 efficiently to cause an intensive upward reflected light as shown in Fig. 6, it acts undesirably, for example, dazzles oncoming vehicles (see JP-A 11-260106).

DE 41 12 194 A1 discloses a headlamp unit which has a dipped-beam headlamp arranged towards the lateral vehicle boundary, and a main-beam headlamp arranged towards the vehicle centre near said dipped-beam headlamp. A light source for generating a sidelight is inserted into the reflector of the main-beam head lamp below a main-beam source. In its rim region pointing towards the dipped-beam head lamp, the main-beam reflector has a plurality of segments having a configuration differing from the rest of its reflecting surface. The segments extend from the front rim of the main-beam reflector to the apex thereof, but only over a small part of the arc length thereof from the front rim to the apex. The segments have slightly concavely curved reflecting surfaces, by means of which the light beams emitted by the sidelight source are reflected essentially parallel to the optical axis of the main-beam reflector.

US-A-4,727,458 discloses a motor vehicle projection headlight, where the projection lens is in part covered by a light transmitting plate. The light transmitting plate has edge regions which are of a wider diameter than the lens. An annular light impermeable cover, which surrounds the lens immediately and at a small distance, is disposed at a distance to the edge region of the light permeable plate. The surface of the cover toward the light transmitting plate is of high reflectivity.

### SUMMARY OF THE INVENTION

Accordingly, there is a need for considerably careful attention given to the position of the hole formed through the reflector for insertion of the position bulb, and the depth and orientation of the insertion of the position bulb. If these can be all considered, a problem may be caused because the position light is extremely dark, designed only in general shapes, and poor in commodity features.

The present invention provides a vehicular lamp as a specific means for solving the above problems in the art.

According to the present invention, there is provided a vehicular lamp as set forth in claim 1. Preferred embodiments of the present invention may be gathered from the dependent claims.

According to a preferred embodiment, the vehicular lamp further comprises a lens provided in the path of light reflected from the secondary reflector for distribution control of the light reflected from the secondary reflector. Preferably, the lens is attached to said concave main reflector at or close to the front end thereof in an integral or multi-part split state.

In the vehicular lamp of the present invention, the sidelight source is provided in the headlight reflector on a portion located at or close to the front end and also located at or close to the outer circumference. In addition, the position reflector is provided to receive light from the sidelight source and reflect the light as one almost in the form of a ring toward a location in a certain direction. Thus, when the position lamp is turned on, the portion of the headlight reflector close to the outer circumference can shine in the form of a ring, which provides a visible indication and a novel design with an extremely outstanding effect on improvement in the beauty of the entire vehicle.

### BRIEF DESCRIPTION OF THE DRAWINGS

- Fig. 1: is a perspective view showing an embodiment of the vehicular lamp according to the present invention;
- Fig. 2: is a cross-sectional view taken along A-A line in Fig. 1;
- Fig. 3: is a cross-sectional view showing another embodiment of the vehicular lamp according to the present invention;
- Fig. 4: is a front view of the another embodiment;
- Fig. 5: is a front view showing yet another embodiment; and
- Fig. 6: is an illustrative view showing a malfunction caused in the prior art.

### DETAILED DESCRIPTION OF THE PREFERRED EMBODIMENTS

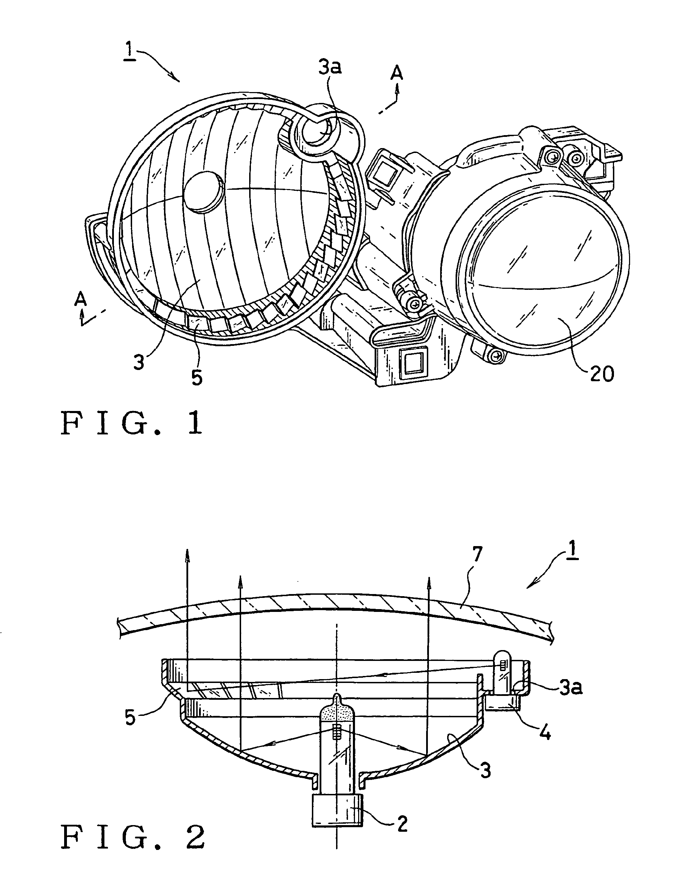

The present invention will now be described based on the embodiments shown in the drawings. The reference numeral 1 is employed in Figs. 1 and 2 to denote a vehicular lamp according to the present invention. In accordance with a primary object of this embodiment, the vehicular lamp 1 is formed as a headlight for use in formation of a high beam distribution. Thus, it comprises a light source 2 such as a halogen bulb and a discharge lamp, and a headlight reflector 3 operative to reflect light from the light source 2 to form the high beam distribution.

The reference numeral 20 is employed in the figures to denote a headlight for use in formation of a low beam distribution. The headlight 20 is formed in the so-called projector type and configured to project no upward light at all except for a certain direction such as toward the left roadside in the left side passage. This configuration is not related to the gist of the present invention and its detailed description is omitted.

Returning again to the description of the vehicular lamp 1, in the present invention, an attachment hole 3a is provided through the headlight reflector 3 close to an outer circumference thereof for attachment of a sidelight source 4 thereto. In the headlight reflector 3 on a portion at or close to a front end thereof, a position reflector 5 is provided almost in the form of a ring to receive light from the sidelight source 4 and reflect it toward a location in a certain direction.

The reference numeral 7 is employed in Fig. 2 to denote an outer lens. As a trend in recent years, the vehicular lamp 1 is preferred in terms of designing if it is excellent in transparency. In the art, lens-cut is applied to the outer lens to form the light distribution of the headlight. In recent years, the light distribution is formed at the headlight reflector 3 while remaining the outer lens 7 almost plain. Therefore, the light reflected from the position reflector 5 is not diffused and can be recognized from external after it transmits through the outer lens 7 while remaining the shape such as the ring.

The above configuration may allow, when the sidelight source 4 is turned on, the light from the sidelight source 4 to reach only the position reflector 5 or both the headlight reflector 3 and the position reflector 5. To define operation of the position light (sidelight) herein, the following description is given on the assumption that it allows the light to reach only the position reflector 5.

In this embodiment, when the sidelight source 4 is turned on, the light therefrom reaches the position reflector 5, which reflects it forward from the vehicle to allow viewers to see a brilliant ring of light. The above situation occurs, for example, at dusk when the headlight source 2 has not been yet turned on. Therefore, the portion of the position reflector 5 located at the rim of the headlight reflector 3 can be seen as the brilliant ring from oncoming vehicles (see also Fig. 1).

If a vehicle-related specification such as a safety standard defines the color of light emitted from the sidelight (for example, light yellow, or orange), the sidelight source 4 may be provided with a colored bulb or a cover having a corresponding color to achieve a desired color of light.

A consideration is given to a situation after dusk and when the light source 2 for the headlight 1 is turned on. In this situation, when light reaches the position reflector 5 also from the headlight source 2 usually brighter than the sidelight source 4, the light from the brighter headlight source 2 becomes dominant and whitens the light reflected from the position reflector 5.

For prevention of this situation, the position reflector 5 is located in the headlight reflector 3 on a location at or close to the front end thereof and more forward than the headlight source 2 as shown in Fig. 2. Thus, even when the headlight source 2 is turned on, the light therefrom is prevented from entering the position reflector 5.

A consideration is given to a situation when light from the sidelight source 4 enters the headlight reflector 3 to the contrary. Before the headlight source 2 is turned on, the entire or partial surface of the headlight reflector 3 surely shines in a color of light yellow, or orange. In this situation, however, if its brightness is not so high as to dazzle oncoming vehicles, the light can be whitened without any practical trouble when the headlight source 2 is turned on. Therefore, it is simply freedom of choice in terms of designing to select the light from the sidelight source 4 that impinges on the headlight reflector 3 or not.

In this way, the position reflector 5 provided close to the outer circumference of the headlight reflector 3 shines in a color of orange or light yellow whenever the sidelight source 4 is turned on, regardless of whether the headlight stays off or on. Thus, it can serve as a sidelight as defined in the vehicle-related specification.

In the above configuration, when the sidelight source 4 is turned on at dusk or the like, the sidelight comes on in the form of, for example, a ring close to the outer circumference of the headlight reflector 3. Thus, such the vehicular lamp 1 can provide a novel design to the vehicle, which improves the commodity value particularly.

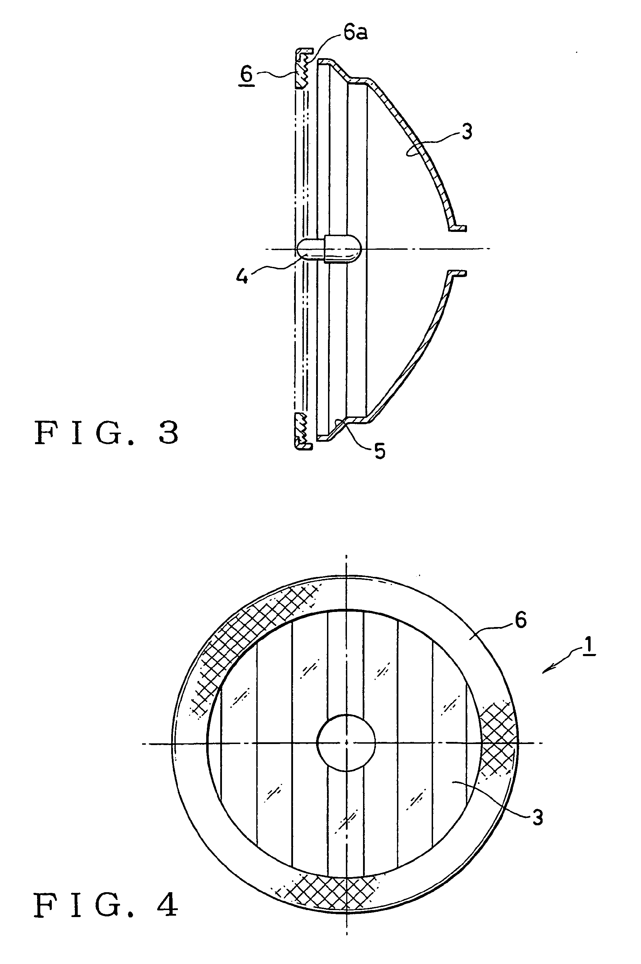

Fig. 3 shows another embodiment of the vehicular lamp 1 according to the present invention. In the previous embodiment, the light emitted from the sidelight source 4 and reflected at the position reflector 5 is designed to directly reach a viewer's line of sight. Therefore, a difference in angle of sight, for example, causes a difference in hue or a large variation in brightness, which easily makes a different impression than an expected design.

This second embodiment is intended to solve such the problem. In this embodiment, the sidelight source 4 is provided on an appropriate location close to the outer circumference of the headlight reflector 3 like the previous embodiment. In addition, the position reflector 5 is provided on a location suitable for receiving the light from the sidelight source 4 to reflect it toward a location in a certain direction. Further, a position lens 6 is provided on a location in a traveling direction of light reflected from the position reflector 5. The position lens 6 has prism-cut 6a applied thereon, for example.

In this case, the position lens 6 may have a shape of an integral ring as shown in Fig. 4. Alternatively, it may have a shape of a combined ring that includes a plurality of triangles arranged along an arc as shown in Fig. 5. In a word, it may be one that is present along the rim at or close to the front end of the headlight reflector 3.

The position lens 6 may be composed of a colorless transparent material. Alternatively, it may be composed of a resinous material with coloration defined for the sidelight, such as light yellow. In a configuration not provided with the position lens 6, mixture of the light yellow light from sidelight source 4 with the white light from the headlight source 2 may possibly cause a deviation in color of the light from the sidelight. To the contrary, the use of the position lens 6, if it is colored with a defined color, causes no possible mixture of colors. Therefore, even if light leakage occurs from the headlight source 2 to the sidelight more or less, it can be accepted.

In the above configuration provided with the position lens 6, the lens may also be employed to flexibly determine the shape with a wider range of designing. The prism-cut 6a may be employed to give a uniform brightness over the surface of the lens 6 and improve the indication quality.

### INDUSTRIAL APPLICABILITY

The present invention is not limited in the examples described above, in which the headlight provided at the front of the vehicle is combined with the sidelight. For example, it is applicable to a combination of a taillight and a turn-signal lamp, or a combination of a back-up lamp and a turn-signal lamp, which are provided at the rear of the vehicle or as different lamps.

## Claims

1. A vehicular lamp (1), comprising:
a main light source (2);
a concave headlight reflector (3) having a front end and an outer circumference for reflecting light from said main light source (2) in a first direction;
a secondary sidelight source (4) provided in the concave headlight reflector (3) on a portion located at or close to the front end and also located at or close to the outer circumference;
a generally annular secondary reflector (5) at or close to the front end of the concave headlight reflector (3) and more forward than the main light source (2), for reflecting light from the secondary sidelight source (4) in said first direction while preventing light from the main light source (2) from entering the secondary reflector (5), wherein said secondary reflector (5) is a position reflector provided almost in the form of a ring in an integral or split state at or close to the front end of the concave headlight reflector (3) to reflect light from the sidelight source (4) toward the front in a certain direction.

2. The vehicular lamp according to claim 1, further comprising a lens (7) provided in the path of light reflected from the secondary reflector (5) for distribution control of the light reflected from the secondary reflector (5).

3. The vehicular lamp according to claim 2, wherein the lens (7) is attached to said concave headlight reflector (3) at or close to the front end thereof in an integral or multi-part split state.

4. The vehicular lamp according to claim 2 or 3, wherein said lens (7) is a position lens provided on a location in a direction of light reflected from the position reflector for distribution control of the light reflected from the position reflector.

## Patentansprüche

1. Eine Fahrzeuglampe (1), die folgendes aufweist:
eine Hauptlichtquelle (2);
einen konkaven Frontlichtreflektor (3) mit einem vorderen Ende und
einem Außenumfang zum Reflektieren von Licht von der Hauptlichtquelle (2) in einer ersten Richtung;
eine sekundäre Seitenlichtquelle (4), die in dem konkaven Frontlichtreflektor (3) vorgesehen ist, und zwar auf einem Teil, welcher an oder nahe zu dem Vorderende und auch an oder nahe zu dem Außenumfang angeordnet ist;
einen allgemeinen ringförmigen sekundären Reflektor (2) an oder nahe zu dem Vorderende des konkaven Frontlichtreflektors (3) und weiter vorwärts gelegen als die Hauptlichtquelle (2) zum Reflektieren von Licht von der sekundären Seitenlichtquelle (4) in der ersten Richtung, während er verhindert, dass Licht von der Hauptlichtquelle (2) in den sekundären Reflektor (5) eintritt, wobei der sekundäre Reflektor (5) ein Positionsreflektor ist, der fast in der Form eines Rings in einem ganzen oder geteilten Zustand vorgesehen ist, und zwar an oder nahe zu dem Vorderende des konkaven Frontlichtreflektors (3), um Licht von der Seitenlichtquelle (4) in einer bestimmten Richtung nach vorn zu reflektieren.

2. Fahrzeuglampe gemäß Anspruch 1, die ferner eine Linse (7) aufweist, welche in dem Pfad des von dem sekundären Reflektor (5) reflektierten Lichts vorgesehen ist zur Verteilungssteuerung des von dem sekundären Reflektor (5) reflektierten Lichts.

3. Fahrzeuglampe gemäß Anspruch 2, wobei die Linse (7) an den konkaven Frontlichtreflektor (3) an oder nahe zu dem Vorderende davon befestigt ist, und zwar in einem ganzen oder mehrteiligen geteilten Zustand.

4. Fahrzeuglampe gemäß Anspruch 2 oder 3, wobei die Linse (7) eine Positionslinse ist, die an einer Stelle in einer Richtung von Licht vorgesehen ist, das von dem Positionsreflektor reflektiert wird, und zwar zur Verteilungssteuerung des von dem Positionsreflektor reflektierten Lichts.

## Revendications

1. Lampe (1) pour véhicule, comprenant :
une source de lumière principale (2),
un réflecteur de phare concave (3) ayant une extrémité avant et une circonférence externe pour réfléchir la lumière provenant de ladite source de lumière principale (2) dans une première direction ;
une source de lumière latérale secondaire (4) prévue dans le réflecteur de phare concave (3) sur une partie située au niveau de ou à proximité de l'extrémité avant et également située au niveau de ou à proximité de la circonférence externe ;
un réflecteur secondaire généralement annulaire (5) au niveau de ou à proximité de l'extrémité avant du réflecteur de phare concave (3) et davantage vers l'avant que la source de lumière principale (2) pour réfléchir la lumière provenant de la source de lumière latérale secondaire (4) dans ladite première direction tout en empechant la lumière provenant de la source de lumière principale (2) d'entrer dans le réflecteur secondaire (5), dans laquelle ledit réflecteur secondaire (5) est un réflecteur de position prévu presque sous la forme d'un anneau dans un état intégral ou fendu au niveau de ou à proximité de l'extrémité avant du réflecteur de phare concave (3) pour réfléchir la lumière provenant de la source de lumière latérale (4) vers l'avant dans une certaine direction.

2. Lampe pour véhicule selon la revendication 1, comprenant en outre une lentille (7) prévue dans la trajectoire de la lumière réfléchie par le réflecteur secondaire (5) pour le controle de distribution de la lumière réfléchie par le réflecteur secondaire (5).

3. Lampe pour véhicule selon la revendication 2, dans laquelle la lentille (7) est fixée audit réflecteur de phare concave (3) au niveau de ou à proximité de son extrémité avant dans un état intégral ou fendu en plusieurs parties.

4. Lampe pour véhicule selon la revendication 2 ou 3, dans laquelle ladite lentille (7) est une lentille de position prévue sur un emplacement dans une direction de lumière réfléchie par le réflecteur de position pour le controle de distribution de la lumière réfléchie par le réflecteur de position.
